# EUROPÄISCHE PATENTSCHRIFT

(11) **EP 3 004 995 B1**
(45) Veröffentlichungstag und Bekanntmachung des Hinweises auf die Patenterteilung: **07.01.2026**
(21) Anmeldenummer: 14727191.0
(22) Anmeldetag: 27.05.2014
(51) Int. Cl.: H04L 12/40, G04G 7/00, H04J 3/06

(54) **VERFAHREN ZUM ERFASSEN EINER SENDERORTSZEIT IN EINEM EMPFÄNGER**
METHOD FOR DETECTING IN A RECEIVER A TRANSMITTER LOCAL TIME
PROCÉDÉ DE DÉTECTION D'UN TEMPS LOCAL ÉMETTEUR DANS UN RÉCEPTEUR

(30) Priorität: 29.05.2013 DE 102013105517
(43) Veröffentlichungstag der Anmeldung: 13.04.2016
(73) Patentinhaber: Weidmüller Interface GmbH & Co. KG, 32758 Detmold (DE)
(72) Erfinder: KRONER, Michael, 33813 Oerlinghausen (DE)
(74) Vertreter: Specht, Peter
(86) Internationale Anmeldenummer: PCT/EP2014/060913
(87) Internationale Veröffentlichungsnummer: WO 2014/191390

(56) Entgegenhaltungen:
- WO-A1-02/14961
- GB-A- 2 426 164
- US-A- 5 027 297
- US-A1- 2007 300 065
- US-A1- 2011 207 417

## Beschreibung

Die Erfindung betrifft ein Verfahren zum Erfassen einer Senderortszeit eines Senders in einem Empfänger, ein Verfahren zum Erzeugen eines Zeitstempels mit der Senderortszeit, sowie eine Vorrichtung und ein Computerprogrammprodukt zur Durchführung des Verfahrens.

Aus der DE 44 38 806 C1 ist ein als Sender ausgebildetes elektronisches Gerät bekannt, das über ein als Feldbus ausgebildetes Netzwerk Daten beispielsweise zu einem Leitrechner als Empfänger senden kann. Es ist bekannt, vom Sender versendeten Daten in einem solchen System mit einem Zeitstempel zu versehen, beispielsweise um die Gültigkeit der Daten im Empfänger bewerten zu können. Für eine fehlerfreie Verwendung des Zeitstempels sollten dabei auf dem Sender und auf dem Empfänger verwendete Uhren mit gleichen Zeitwerten laufen, so dass eine bei der Erzeugung des Zeitstempels vom Sender verwendete Ortszeit zum Zeitpunkt des Sendens der Daten im Empfänger auch richtig interpretiert wird. Dazu sind die Uhren im Sender und im Empfänger hinsichtlich ihres absoluten Zeitwertes zu synchronisieren, was jedoch nicht unerheblichen technischen Aufwand mit sich bringt.

Verfahren zum Synchronisieren zweier Uhren in Geräten, die über ein Netzwerk miteinander verbunden sind, sind beispielsweise aus den Druckschriften US 2007/0300065 A1 und GB 2 426 164 A bekannt. Bei diesen Verfahren werden Zeitstempel mit absoluten Zeitangaben zwischen den Geräten über das Netzwerk ausgetauscht, um die Uhren unter Berücksichtigung der Laufzeiten der Zeitstempel in dem Netzwerk zu synchronisieren.

Auch die Druckschriften US 5 027 297 A und US 2011/207417 A1 beschreiben jeweils Verfahren zum Erzeugen eines Zeitstempels mit einer absoluten Zeitangabe für Daten, die von einem Empfänger in einem Netzwerk empfangen werden. Eine Besonderheit dabei ist, dass der jeweilige Sender keine Uhr mit einer absoluten Zeitangabe aufweist, sondern lediglich eine Uhr, die eine relative Zeitdauer angibt, die seit einem beliebigen Ereignis auf dem Sender verstrichen ist. Die Uhr auf dem Sender kann so relativ einfach z.B. als Zähler ausgebildet sein, der in äquidistanten Zeitschritten beginnend z.B. mit dem Einschalten des Senders hochzählt. Daten des Senders werden dann mit dem Zählerwert als relativer Zeitstempel versehen. Im Empfänger wird basierend auf dem absoluten Zeitpunkt des Empfangs eines ersten Datensatzes des Empfängers der absolute Zeitpunkt ermittelt, der dem Start des Zählers auf dem Sender entspricht. Mit der Kenntnis dieses absoluten Zeitpunkts können alle nachfolgend empfangenen relative Zeitstempel im Empfänger in absolute Zeitstempel umgerechnet werden.

Bei der Bestimmung des absolute Zeitpunkts, der dem Start des Zählers auf dem Sender entspricht, führt z.B. eine nicht genau bekannte Übertragungszeit des ersten Datensatzes zu einer Ungenauigkeit. Nachteilig ist, dass sich eine derartige Ungenauigkeit auf allen nachfolgend bestimmten absoluten Zeitstempel auswirkt.

Es ist Aufgabe der Erfindung, die Versendung der Daten von einem Sender zu einem Empfänger im Hinblick auf eine Verwendung von Zeitstempeln zu verbessern.

Die Aufgabe wird durch die Merkmale der unabhängigen Ansprüche gelöst. Bevorzugte Weiterbildungen sind Gegenstand der abhängigen Ansprüche.

Gemäß einem Aspekt der Erfindung umfasst ein Verfahren zum Erfassen einer Senderortszeit eines Senders in einem Empfänger die folgenden Schritte: Bestimmen eines Bezugszeitpunktes für die Senderortszeit, Empfangen einer Senderzeitdauer vom Sender, die auf dem Sender seit dem Bezugszeitpunkt für die Senderortszeit vergangen ist und Bestimmen der Senderortszeit in dem Empfänger basierend auf dem Bezugszeitpunkt für die Senderortszeit und der empfangenen Senderzeitdauer.

Dabei ist der Bezugszeitpunkt für die Senderortszeit der Zeitpunkt eines Ereignisses, das auf dem Sender und dem Empfänger gleichermaßen stattfindet. Dieses Ereignis kann beliebig sein, solange diesem Ereignis eine bestimmte absolute Zeit zugeordnet werden, kann, die auf beiden Geräten gleich sein muss. So kann als Ereignis beispielsweise die Initialisierung oder der Start des Netzwerkes herangezogen werden. Eine andere oder zusätzliche Möglichkeit wäre im Falle eines Sensors bestimmte Messsituationen als Ereignis heranzuziehen und basierend darauf die Bezugszeitpunkt für die Senderortszeit zu bestimmen.

Bei dem erfindungsgemäßen Verfahren an wird dem Empfänger vom Sender kein Zeitstempel mit einem absoluten Zeitwert übermittelt, sondern nur eine relative Zeitdauer, die seit einem Bezugszeitpunkt vergangen ist. Ist dem Empfänger der Bezugszeitpunkt bekannt, auf den sich die vom Sender empfangene relative Bezugszeitdauer bezieht, dann kann er sich vor Ort den benötigten Zeitstempel selbst zusammensetzen. Auf diese Weise braucht der Sender keine eigene Uhr mit einer exakten Absolutzeit zu führen. Es reicht aus, einen beliebigen Zeitgeber zu verwenden, mit dem Zeitabstände zu vorher festlegbaren Bezugszeitpunkten messbar und an den Empfänger übertragbar sind.

Damit fällt der Aufwand zum Führen eines exakten Zeitwertes nur noch empfängerseitig, nicht mehr jedoch senderseitig an. Dieses kann große Vorteile bieten, insbesondere wenn das eingangs genannte elektronische Gerät beispielsweise ein Sensor ist, der ausschließlich Messdaten in einen Regelkreis sendet, nicht jedoch empfängt und daher selbst keine Gültigkeitsprüfungen für Daten durchführen muss. Sollte zudem der exakte Zeitwert im Empfänger falsch geführt werden, so können im Rahmen des angegebenen Verfahrens alle erfassten Senderortszeiten nachträglich noch korrigiert werden, da für alle erfassten Senderortszeiten ein einheitlicher Bezugszeitpunkt verwendet wird.

In einer Weiterbildung des angegebenen Verfahrens umfasst die empfangene Senderzeitdauer einen Wert eines auf dem Sender laufenden Zählers, da Zähler als Zeitgeber sind besonders kostengünstig und technisch einfach zu implementieren sind.

In einer anderen Weiterbildung des angegebenen Verfahrens wird der Bezugszeitpunkt für die Senderortszeit in regelmäßigen Abständen neu bestimmt, um beispielsweise Driften oder Jitter in der vom Sender ausgegebenen Senderzeitdauer zu korrigieren.

In einer bevorzugten Weiterbildung des angegebenen Verfahrens wird zum Bestimmen des Bezugszeitpunktes für die Senderortszeit eine auf dem Empfängger verstrichene Empfängerzeitdauer seit dem Ereignis erfasst und von der Empfängerortszeit abgezogen. Auf diese Weise kann der Bezugszeitpunkt für die Senderortszeit im Empfänger zu jedem beliebigen Zeitpunkt bestimmt werden, ohne dass der Bezugszeitpunkt für die Senderortszeit selbst in einem Speicher hinterlegt sein muss.

In einer besonders bevorzugten Weiterbildung des angegebenen Verfahrens wird zum Bestimmen der Senderortszeit die Bezugszeit für die Senderortszeit mit der empfangenen Senderzeitdauer addiert.

Gemäß einem weiteren Aspekt der Erfindung umfasst ein Verfahren zum Erzeugen eines Zeitstempels mit einer Senderortszeit zu einer von einem Sender generierten Dateneinheit die folgenden Schritte: Senden der Dateneinheit zusammen mit einer Senderzeitdauer, die seit einem Bezugszeitpunkt für die Senderortszeit vergangen ist, vom Sender zu einem Empfänger und Erzeugen des Zeitstempels basierend auf der Senderortszeit zum Zeitpunkt des Sendens der generierten Dateneinheit, die mit einem der vorstehenden angegebenen Verfahren erfasst wird.

Gemäß einem weiteren Aspekt der Erfindung ist eine Vorrichtung, die insbesondere als Recheneinheit ausgebildet ist, eingerichtet, eines der angegebenen Verfahren auszuführen.

In einer Weiterbildung der Erfindung weist die angegebene Vorrichtung einen Speicher und einen Prozessor auf. Dabei ist eines der angegebenen Verfahren in Form eines Computerprogramms in dem Speicher hinterlegt und der Prozessor zur Ausführung des Verfahrens vorgesehen, wenn das Computerprogramm aus dem Speicher in den Prozessor geladen ist.

Die Erfindung betrifft auch ein Computerprogramm mit Programmcodemitteln, um alle Schritte eines der angegebenen Verfahren durchzuführen, wenn das Computerprogramm auf einem Computer oder einer der angegebenen Vorrichtungen ausgeführt wird.

Die Erfindung betrifft auch ein Computerprogrammprodukt, das einen Programmcode enthält, der, wenn er auf einer Datenverarbeitungseinrichtung ausgeführt wird, eines der angegebenen Verfahren durchführt.

Nachfolgend wird die Erfindung anhand von Ausführungsbeispielen mithilfe von Figuren näher erläutert. Die Figuren zeigen:
- Fig. 1: eine Prinzipdarstellung eines Netzwerks mit elektronischen Geräten, und
- Fig. 2: eine Prinzipdarstellung zur Bestimmung einer Senderortszeit zum Zeitpunkt des Sendes von Daten in einem Sender.

In den Figuren werden gleiche technische Elemente mit gleichen Bezugszeichen versehen und nur einmal beschrieben.

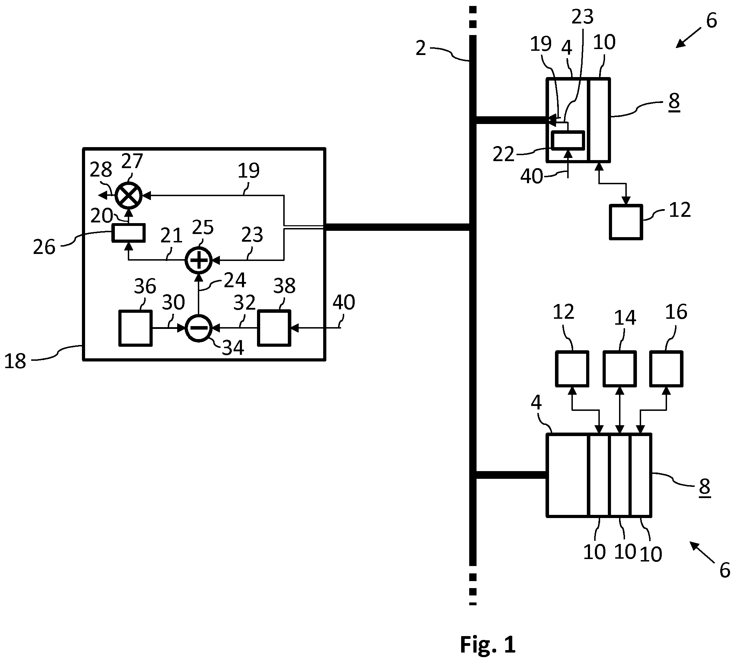

Es wird auf Fig. 1 Bezug genommen, die eine Prinzipdarstellung eines Netzwerks 2 mit einem Feldbusanschlussmodul 4 aufweisenden elektronischen Geräten 6 zeigt.

Das Netzwerk 2 kann in der vorliegenden Ausführung beispielsweise ein an sich bekannter Feldbus sein, der in einem Industriebetrieb unterhalb einer Leitebene zur Vorgabe von Führungsgrößen Sensoren und Aktoren zu Regelkreisen zusammenschließt. Derartige Feldbusse, wie beispielsweise CAN-open (controller area network), PROFIBUS, PROFINET und EtherCAT, sind bekannt und sollen nachstehend nicht weiter beschrieben werden.

Die einzelnen elektronischen Geräte 6 können nach Art eines modularen Steuerungssystems aufgebaut sein, wie es beispielsweise aus der DE 44 38 806 C1 bekannt ist. Im Rahmen dieses Aufbaus können die einzelnen elektronischen Geräte das jeweilige Anschlussmodul 4 umfassen. Über die einzelnen Feldbusanschlussmodule 4 können Anschlussblöcke 8 an das Netzwerk 2 angeschlossen sein. Die einzelnen Anschlussblöcke 8 sind aus Signalleiterscheiben 10 und nicht weiter dargestellten Versorgungsscheiben aufgebaut, über die Sensoren 12, Aktoren 14 und andere Feldgeräte 16 angesteuert werden können.

Ferner kann an das Netzwerk 2 ein Leitrechner 18 angeschlossen sein, der den elektronischen Geräten 6 übergeordnet ist, um die elektronischen Geräte 6 beispielsweise im Rahmen einer automatisierten Fertigung anzusteuern und die zuvor genannten Führungsgrößen vorzugeben.

Im Betrieb des Netzwerkes senden die Feldbusanschlussmodule 4 der elektronischen Geräte 6 als Sender Daten 19, wie Fehlerprotokollen oder anderer Nachrichten an den Leitrechner 18. Der Leitrechner 18 erhält die versendeten Daten 19 als Empfänger und wertet die empfangenen Daten 19 aus. In diesem Zusammenhang kann es für den Leitrechner 18 notwendig sein, die Gültigkeit der empfangenen Daten 19 abzuleiten.

Eine Möglichkeit, dem Leitrechner 18 ein Maß für die Gültigkeit der Daten 19 bereitzustellen ist es, die Daten 19 mit Zeitstempeln 20 zu versehen, aus denen beispielsweise eindeutig der Zeitpunkt der Entstehung oder Generierung der Daten 19 hervorgeht. Derartige Zeitstempel 20 könnten beispielsweise basierend auf einer Echtzeituhr direkt in den Feldbusanschlussmodulen 4 der elektronischen Geräte 6 vor dem Versenden der Daten 19 generiert werden, wobei jedoch sichergestellt sein muss, dass auch auf dem Leitrechner 18 als Empfänger eine entsprechende Echtzeituhr vorhanden ist, die mit der Echtzeituhr des entsprechenden elektronischen Gerätes 6 synchronisiert ist, von dem der Leitrechner 18 die Daten empfängt. Nur dann können alle Teilnehmer 6, 18 im Netzwerk 2 zur Bewertung der Gültigkeit der Daten 19 von derselben Zeitbasis ausgehen.

Nachstehend soll jedoch auf die Bereitstellung einer Echtzeituhr in allen Netzwerkteilnehmern verzichtet werden, ohne auf die Bewertung der Gültigkeit der Daten 19 verzichten zu müssen. Ein Beispiel dafür wäre, wenn eines der elektronischen Geräte 6 ausschließlich Daten 19 zu versenden hätte. Der Leitrechner 18 könnte sich den Zeitstempel 20 selbst erzeugen, während das elektronische Gerät 6 selbst keine Zeitstempel benötigt. Die Erzeugung eines Zeitstempels 20 für die vom elektronischen Gerät 6 versendeten Daten 19 auf dem Leitrechner 18 soll nachstehend detailliert beschrieben werden.

Um sich den Zeitstempel 19 selbst zu erzeugen benötigt der Leitrechner 18 die Ortszeit 21 des Feldbusanschlussmoduls 4 des die Daten 19 versendenden elektronischen Gerätes 6, die nachstehend Senderortszeit 21 genannt wird. Dazu ist in der vorliegenden Ausführung in dem Feldbusanschlussmodul 4 des die Daten 19 versendenden elektronischen Geräts 6 ein relativer Senderzeitgeber 22, wie beispielsweise ein Zähler eingesetzt. Dieser gibt ausgehend von einer noch zu beschreibenden zeitlichen Bezugsbasis, eine verstrichene Zeitdauer 23, nachstehend Senderzeitdauer 23 genannt, aus, die an den Leitrechner 18 übertragen wird.

Überträgt das Feldbusanschlussmodul 4 des die Daten 19 versendenden elektronischen Geräts 6 Daten 19 an den Leitrechner 18, so sendet es gemeinsam mit diesen Daten 19 auch die aktuelle Senderzeitdauer 23 des Senderzeitgebers 22 mit. Der Leitrechner 18 addiert die empfangene Sendezeitdauer 23 und einen noch zu beschreibenden Bezugszeitpunkt 24 in einem Addierglied 25 und erhält so die oben genannte Senderortszeit 21. Aus der Senderortszeit 21 kann der Leitrechner 18 dann in einer Zeitstempelerzeugungseinrichtung 26 den Zeitstempel 20 erzeugen und beispielsweise in einem Mischer 27 basierend auf den Daten 19 und dem Zeitstempel 20 entsprechende zeitgestempelte Daten 28 erzeugen.

Zur Durchführung des zuvor beschriebenen Verfahrens sollte der zuvor genannte Bezugszeitpunkt 24 eine Zeitbasis sein, auf die sich das Feldbusanschlussmodul 4 des die Daten 19 sendenden elektronischen Geräts 6 als auch der Leitrechner 18 gemeinsam beziehen. In diesem Fall kann der Bezugszeitpunkt 24 durch Subtraktion aus einer Echtzeit 30 und einer Empfängerzeitdauer 32 in einem Subtraktionsglied 34 gebildet werden. Die Echtzeit 30 wird in der vorliegenden Ausführung aus einer auf dem Leitrechner 18 laufenden Echtzeituhr 36 ausgelesen. Die Empfängerzeitdauer 32 ist ein zur Senderzeitdauer 23 analoger Zeitdauerwert. Sie wird daher aus einem auf dem Leitrechner 18 laufenden relativen Empfängerzeitgeber 38 ausgelesen, der wie im Feldbusanschlussmodul 4 des die Daten 19 sendenden elektronischen Geräts 6 als Zähler ausgebildet sein kann. Mithilfe der Empfängerzeitdauer 32 kann so die oben genannte gemeinsame Zeitbasis und damit der Bezugszeitpunkt 24 gefunden werden, auf die sich das Feldbusanschlussmodul 4 des die Daten 19 sendenden elektronischen Geräts 6 als auch der Leitrechner 18 bei der Erzeugung ihrer entsprechenden Zeitdauern 23, 32 gemeinsam beziehen.

Um eine derartige gemeinsame Zeitbasis und damit einen gemeinsamen Bezugszeitpunkt 24 zu schaffen, werden die beiden relativen Zeitgeber 22, 38 durch ein Ereignis 40 aufeinander ereignissynchronisiert. Ein derartiges geeignetes Ereignis kann beispielsweise das Einschalten eines der beiden Netzwerkteilnehmer 6, 18 sein. Mit dem Empfang des ereignissynchronisierenden Ereignisses 40 können dann alle relativen Zeitgeber 22, 38 gestartet werden.

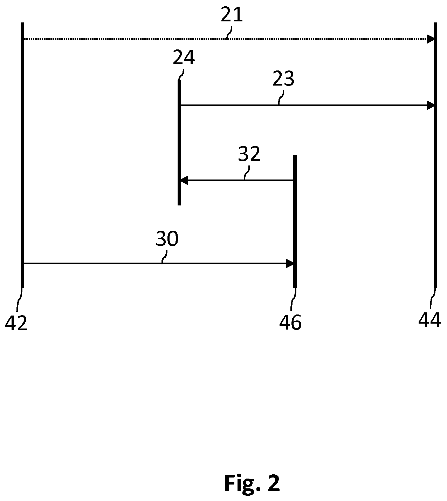

Der Hintergrund der Ereignissynchronisation der beiden Zeitgeber 22, 38 und die damit verbundene Möglichkeit, die Senderortszeit 21 für die Generierung eines Zeitstempels 20 im Leitrechner 18 zu bestimmen, soll nachstehend anhand von Fig. 2 näher verdeutlicht werden.

Die Senderortszeit 21 stellt anschaulich ebenfalls eine Zeitdauer dar, die jedoch von einem rein illustrativ dargestellten absoluten Referenzzeitpunkt 42 aus zu betrachten ist, der mit einem Koordinatenursprung in einem Koordinatensystem vergleichbar ist. Von diesem rein illustrativen, absoluten Referenzzeitpunkt 42 aus stellen die absolute Senderortszeit 21 eine Zeitdauer zu einem beliebigen ersten Zeitpunkt 44 in der Zeit und die absolute Empfängerortszeit 30 eine Zeitdauer zu einem beliebigen zweiten Zeitpunkt 46 in der Zeit dar. Die absolute Senderortszeit 21 ist in Fig. 2 der Übersichtlichkeit halber gepunktet dargestellt ist.

Demgegenüber gibt es den gemeinsamen Bezugszeitpunkt 24, an dem das ereignissynchronisierenden Ereignis 40 stattgefunden hat, und an dem beide Zeitgeber 22, 38 gestartet wurden. Wird damit die absolute Empfängerortszeit 30 im Leitrechner 18 beim Empfang der Daten 19 gemessen, kann ausgehend von dieser absoluten Empfängerortszeit 30 über die ebenso im Leitrechner 18 verfügbare Empfängerzeitdauer 32 jederzeit auf den gemeinsamen Bezugszeitpunkt 24 zum Zeitpunkt des Ereignisses 40 zurückgerechnet werden. Ausgehend von diesem gemeinsamen Bezugszeitpunkt 24 kann sich dann der Leitrechner 18 unter Berücksichtigung der empfangenen Senderzeitdauer 23 die Senderortszeit 21 eindeutig in der oben genannten Weise bestimmen.

### Bezugszeichenliste

- 2: Netzwerk
- 4: Feldbusanschlussmodul
- 6: elektronische Geräte
- 8: Anschlussblöcke
- 10: Signalleiterscheiben
- 12: Sensor
- 14: Aktor
- 16: Feldgeräte
- 18: Leiterrechner
- 19: Daten
- 20: Zeitstempel
- 21: Senderortszeit
- 22: Senderzeitgeber
- 23: Senderzeitdauer
- 24: Bezugszeitpunkt
- 26: Zeitstempelerzeugungseinrichtung
- 27: Mischer
- 28: zeitgestempelte Daten
- 30: Echtzeit
- 32: Empfängerzeitdauer
- 34: Subtraktionsglied
- 36: Echtzeituhr
- 38: Empfängerzeitgeber
- 40: Ergebnis
- 42: Referenzzeitpunkt
- 44: erster Zeitpunkt
- 46: zweiter Zeitpunkt

## Patentansprüche

1. Verfahren zum Erfassen einer Senderortszeit (21) eines Senders (4) in einem Empfänger (18), umfassend
- Bestimmen eines Bezugszeitpunktes (24) für die Senderortszeit (21), wobei der Bezugszeitpunkt (24) für die Senderortszeit (21) der Zeitpunkt eines Ereignisses (40) ist, das auf dem Sender (4) und dem Empfänger (18) gleichermaßen stattfindet,
- Empfangen einer Senderzeitdauer (23) vom Sender (4), die auf dem Sender (4) seit dem Bezugszeitpunkt (24) für die Senderortszeit (21) vergangen ist, und
- Bestimmen der Senderortszeit (21) in dem Empfänger (18) basierend auf dem Bezugszeitpunkt (24) für die Senderortszeit (21) und der empfangenen Senderzeitdauer (23).

2. Verfahren nach einem der vorstehenden Ansprüche, wobei die empfangene Senderzeitdauer (23) einen Wert eines auf dem Sender (4) laufenden Zählers (22) umfasst.

3. Verfahren nach Anspruch 1 oder 2, umfassend ein Aktualisieren des Bezugszeitpunktes (24) basierend auf einem weiteren Ereignis.

4. Verfahren nach einem der Ansprüche 1 bis 3, wobei zum Bestimmen des Bezugszeitpunktes (24) für die Senderortszeit (21) eine auf dem Empfänger (18) verstrichene Empfängerzeitdauer (32) seit dem Ereignis (40) erfasst und von einer aktuellen Empfängerortszeit (30) abgezogen wird.

5. Verfahren nach einem der vorstehenden Ansprüche, wobei zum Bestimmen der Senderortszeit (21) die Bezugszeit (24) für die Senderortszeit (21) mit der empfangenen Senderzeitdauer (23) addiert wird.

6. Verfahren zum Erzeugen eines Zeitstempels (20) mit einer Senderortszeit (21) zu einer von einem Sender (4) generierten Dateneinheit (19), umfassend:
- Senden der Dateneinheit (19) zusammen mit einer Senderzeitdauer (23), die seit einem Bezugszeitpunkt (24) für die Senderortszeit (21) vergangen ist, vom Sender (4) zu einem Empfänger (18);
- Bestimmen der Senderortszeit (21) nach einem Verfahren nach einem der vorstehenden Ansprüche; und
- Erzeugen (26) des Zeitstempels (20) basierend auf der Senderortszeit (21) zum Zeitpunkt des Sendens der generierten Dateneinheit (19).

7. Vorrichtung (18) gegebenenfalls System, insbesondere Recheneinheit, umfassend einen Empfänger und gegebenenfalls einen Sender, die eingerichtet sind, ein Verfahren nach einem der vorstehenden Ansprüche durchzuführen.

8. Computerprogrammprodukt umfassend einen Programmcode, der, wenn er auf einer Datenverarbeitungseinrichtung eines Empfängers ausgeführt wird, ein Verfahren nach einem der vorstehenden Ansprüche durchführt.

## Claims

1. A method for detecting a transmitter local time (21) of a transmitter (4) in a receiver (18), comprising
- Determining a reference time (24) for the transmitter local time (21), wherein the reference time (24) for the transmitter local time (21) is the time of an event (40) that takes place in the same manner on the transmitter (4) and the receiver (18),
- Receiving a transmitter time duration (23) from the transmitter (4) that elapsed on the transmitter (4) since the reference time (24) for the transmitter local time (21), and
- Determining the transmitter local time (21) in the receiver (18) based on the reference time (24) for the transmitter local time (21) and on the received transmitter time duration (23).

2. The method according to one of the previous claims, wherein the received transmitter time duration (23) has a value of a counter (22) running on the transmitter (4).

3. The method according to Claim 1 or 2, comprising an updating of the reference time (24) based on another event.

4. The method according to one of Claims 1 to 3, wherein in order to determine the reference time (24) for the transmitter local time (21) a receiver time duration (32) that elapsed on the receiver (18) since the event (40) is detected and subtracted from a current receiver local time (30).

5. The method according to one of the previous claims, wherein in order to determine the transmitter local time (21) the reference time (24) for the transmitter local time (21) is added to the received transmitter time duration (23).

6. A method for generating a time stamp (20) with a transmitter local time (21) to a data unit (19) generated by a transmitter (4), comprising:
- Transmitting the data unit (19) together with a transmitter time duration (23) that elapsed since a reference time (24) for the transmitter local time (21) from the transmitter (4) to a receiver (18);
- Determining the transmitter local time (23) according to a method according to one of the previous claims; and
- Generating (26) the time stamp (20) based on the transmitter local time (21) at the time of the transmitting of the generated data unit (19).

7. A device (18), optionally a system, in particular a calculating unit, comprising a receiver and optionally a transmitter, which are designed to carry out a method according to one of the previous claims.

8. A computer program product comprising a program code which, when it is executed on a data processing device of a receiver, carries out a method according to one of the previous claims.

## Revendications

1. Procédé pour l'acquisition d'un temps local d'émetteur (21) d'un émetteur (4) dans un récepteur (18), comprenant :
- la détermination d'un moment de référence (24) pour le temps local d'émetteur (21), lequel moment de référence (24) pour le temps local d'émetteur (21) est le moment d'un événement (40) qui se produit de la même manière sur l'émetteur (4) et sur le récepteur (18) ;
- la réception d'un laps de temps d'émetteur (23) de l'émetteur (4) qui s'est écoulé sur l'émetteur (4) depuis le moment de référence (24) pour le temps local d'émetteur (21) et
- la détermination du temps local d'émetteur (21) dans le récepteur (18) sur la base du moment de référence (24) pour le temps local d'émetteur (21) et du laps de temps d'émetteur (23) reçu.

2. Procédé selon l'une des revendications précédentes, dans lequel le laps de temps d'émetteur (23) reçu inclut une valeur d'un compteur (22) qui tourne sur l'émetteur (4).

3. Procédé selon la revendication 1 ou 2, comprenant une actualisation du moment de référence (24) sur la base d'un autre événement.

4. Procédé selon l'une des revendications 1 à 3 dans lequel, en vue de la détermination du moment de référence (24) pour le temps local d'émetteur (21), un intervalle de temps de récepteur (32) écoulé sur le récepteur (18) depuis l'événement (40) est acquis et soustrait d'un temps local de récepteur (30) actuel.

5. Procédé selon l'une des revendications précédentes dans lequel, en vue de la détermination du temps local d'émetteur (21), le temps de référence (24) pour le temps local d'émetteur (21) est additionné au laps de temps d'émetteur (23) reçu.

6. Procédé pour la génération d'un horodatage (20) avec un temps local d'émetteur (21) pour une unité de données (19) générée par un émetteur (4), comprenant :
- l'émission de l'unité de données (19), avec un laps de temps d'émetteur (23) écoulé depuis un moment de référence (24) pour le temps local d'émetteur (21), de l'émetteur (4) vers un récepteur (18) ;
- la détermination du temps local d'émetteur (23) par un procédé selon l'une des revendications précédentes et
- la génération (26) de l'horodatage (20) sur la base du temps local d'émetteur (21) au moment de l'émission de l'unité de données générée.

7. Dispositif (18), le cas échéant système, en particulier unité de calculateur, comprenant un récepteur et, le cas échéant, un émetteur, qui sont configurés pour exécuter un procédé selon l'une des revendications précédentes.

8. Programme pour ordinateur comprenant un code de programme qui exécute un procédé selon l'une des revendications précédentes lorsqu'il est implémenté dans une installation de traitement de données d'un récepteur.
